# EUROPEAN PATENT APPLICATION

(11) **EP 3 107 012 A1**
(43) Date of publication of application: **21.12.2016**
(21) Application number: 16173805.9
(22) Date of filing: 09.06.2016
(51) Int. Cl.: G06F 17/30

(54) **MODIFYING SEARCH RESULTS BASED ON CONTEXT CHARACTERISTICS**

(30) Priority: 19.06.2015 US 201514744879
(71) Applicant: Lenovo (Singapore) Pte. Ltd., Singapore 556741 (SG)
(72) Inventor: Waltermann, Rod D., Rougemont, NC 27572 (US); Burgmeier, Hermann Franz, Chapel Hill, NC 27517 (US); Kingsbury, Timothy Winthrop, Cary, NC 27511 (US)
(74) Representative: Leffers, Thomas

(57) **Abstract**

One embodiment provides a method, including: capturing, using a processor, context characteristics relating to a user; storing, using a processor, the context characteristics relating to a user; receiving, at a device, a search query; performing a search based on the search query, wherein the search is modified based on at least one context characteristic relevant to the search query; and displaying, on a display device, search results returned from the search. Other aspects are described and claimed.

## Description

### BACKGROUND

Due to the increase in storage space and storage location, a user may store vast amounts of information. However, users may find it difficult to remember exactly where a particular file is stored. Additionally, a user may have access to additional information, for example, through network or internet connections. To assist in finding particular files or information, many applications have search features which allow a user to input a search query to assist in finding particular files or information. However, in order to find the desired information a user has to enter a search query with some level of specificity.

### BRIEF SUMMARY

In summary, one aspect provides a method, comprising: capturing, using a processor, context characteristics relating to a user; storing, using a processor, the context characteristics relating to a user; receiving, at a device, a search query; performing a search based on the search query, wherein the search is modified based on at least one context characteristic relevant to the search query; and displaying, on a display device, search results returned from the search.

Another aspect provides an information handling device, comprising: a display device; a processor operatively coupled to the display device; a memory device that stores instructions executable by the processor to: capture context characteristics relating to a user; store the context characteristics relating to a user; receive a search query; perform a search based on the search query, wherein the search is modified based on at least one context characteristic relevant to the search query; and display, on the display device, search results returned from the search.

A further aspect provides a product, comprising: a storage device that stores code executable by a processor, the code comprising: code that captures context characteristics relating to a user; code that stores the context characteristics relating to a user; code that receives a search query; code that performs a search based on the search query, wherein the search is modified based on at least one context characteristic relevant to the search query; and code that displays, to a display device, search results returned from the search.

The foregoing is a summary and thus may contain simplifications, generalizations, and omissions of detail; consequently, those skilled in the art will appreciate that the summary is illustrative only and is not intended to be in any way limiting.

For a better understanding of the embodiments, together with other and further features and advantages thereof, reference is made to the following description, taken in conjunction with the accompanying drawings. The scope of the invention will be pointed out in the appended claims.

### BRIEF DESCRIPTION OF THE SEVERAL VIEWS OF THE DRAWINGS

FIG. 1 illustrates an example of information handling device circuitry.
FIG. 2 illustrates another example of information handling device circuitry.
FIG. 3 illustrates an example method of modifying search results based on context characteristics.

### DETAILED DESCRIPTION

It will be readily understood that the components of the embodiments, as generally described and illustrated in the figures herein, may be arranged and designed in a wide variety of different configurations in addition to the described example embodiments. Thus, the following more detailed description of the example embodiments, as represented in the figures, is not intended to limit the scope of the embodiments, as claimed, but is merely representative of example embodiments.

Reference throughout this specification to "one embodiment" or "an embodiment" (or the like) means that a particular feature, structure, or characteristic described in connection with the embodiment is included in at least one embodiment. Thus, the appearance of the phrases "in one embodiment" or "in an embodiment" or the like in various places throughout this specification are not necessarily all referring to the same embodiment.

Furthermore, the described features, structures, or characteristics may be combined in any suitable manner in one or more embodiments. In the following description, numerous specific details are provided to give a thorough understanding of embodiments. One skilled in the relevant art will recognize, however, that the various embodiments can be practiced without one or more of the specific details, or with other methods, components, materials, et cetera. In other instances, well known structures, materials, or operations are not shown or described in detail to avoid obfuscation.

With the vast amounts of information stored by and accessible to a user, a user may find it hard to find a particular file or information relating to a desired subject matter. In order to assist with this, most applications contain a search interface for a user to provide a search query. However, in order to perform a useful search a user must articulate clear unambiguous search terms to return search results relevant to what the user is actually searching for. Sometimes, however, a user finds it difficult to articulate such clear search terms. For example, a user may want to find a particular file, but may find it difficult to articulate useful search terms to provide a proper or clear search query. As another example, a user may want to find particular information through the internet but may not know enough about what they are searching for to provide a search query with a level of specificity as may be required by the search interface.

Some search interfaces respond to keyword queries, which require that a user define the search query by a few select keywords. Identifying the keywords required for this type of search may be difficult for a user. As such, the user may provide some keywords and get search results that are not related to what the user is actually looking for. In an effort to correct this problem, some search interfaces respond to free form natural language. This may assist a user in that the user can provide a search query based upon how they are thinking of the issue. However, even then it may be difficult for a user to provide a search query with unambiguous terms that the search feature can use to provide pertinent search results. It would be useful if the search interfaces could use context data to assist in performing a relevant search and also to assist in defining ambiguous terms.

These technical issues present problems for users in that finding a particular file or information without a certain level of information regarding the file or information may be difficult. Conventional methods require the user to provide specific search terms to find a file. In order to perform most effectively, the search interfaces also require that a user provide unambiguous terms, which may be very difficult for a user. As such, a technical problem is found in that current file and information search techniques fail to leverage context characteristics relating to the user to assist in performing a search to find a file or information.

Accordingly, an embodiment provides a method of returning search results narrowed by context characteristics relating to the user. An embodiment may first obtain context characteristics relating to a user or a user's activities. These context characteristics may be obtained from a data store containing previously captured context characteristics or may be obtained at a time close to when a user is performing a search. An embodiment may then receive a search query and perform a search. The search may be modified using the context characteristics or a sub-set of the context characteristics. By taking into account contextual factors, the quality of the search results can be improved. One embodiment may weight the context characteristics to identify which characteristics may be more relevant to the search query.

In one embodiment the context characteristics may be used to clarify an ambiguous search term included in the search query. For example, if a user says "find the file I need for the meeting", the term "the meeting" is ambiguous. In this case, an embodiment may use the user's calendar information to determine what meeting the user may be referring to. Upon modifying the search, an embodiment may display the search results. In one embodiment these search results may be displayed in an order of most relevant to the search query and context characteristics.

The illustrated example embodiments will be best understood by reference to the figures. The following description is intended only by way of example, and simply illustrates certain example embodiments.

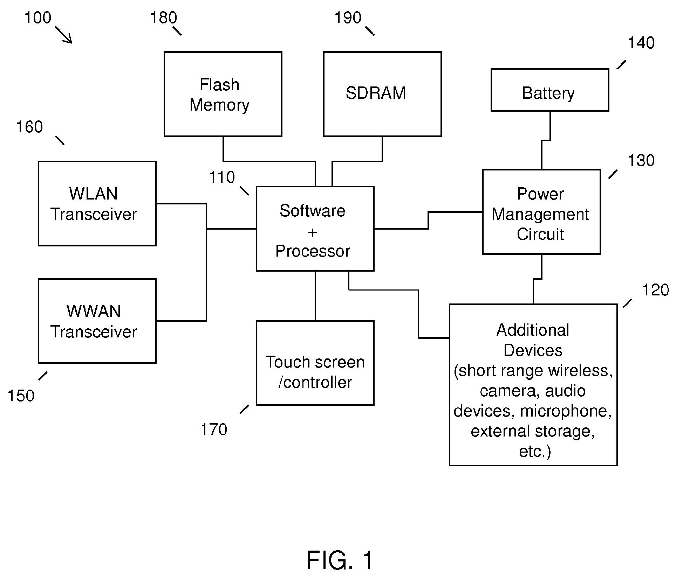

While various other circuits, circuitry or components may be utilized in information handling devices, with regard to smart phone and/or tablet circuitry 100, an example illustrated in FIG. 1 includes a system on a chip design found for example in tablet or other mobile computing platforms. Software and processor(s) are combined in a single chip 110. Processors comprise internal arithmetic units, registers, cache memory, busses, I/O ports, etc., as is well known in the art. Internal busses and the like depend on different vendors, but essentially all the peripheral devices (120) may attach to a single chip 110. The circuitry 100 combines the processor, memory control, and I/O controller hub all into a single chip 110. Also, systems 100 of this type do not typically use SATA or PCI or LPC. Common interfaces, for example, include SDIO and I2C.

There are power management chip(s) 130, e.g., a battery management unit, BMU, which manage power as supplied, for example, via a rechargeable battery 140, which may be recharged by a connection to a power source (not shown). In at least one design, a single chip, such as 110, is used to supply BIOS like functionality and DRAM memory.

System 100 typically includes one or more of a WWAN transceiver 150 and a WLAN transceiver 160 for connecting to various networks, such as telecommunications networks and wireless Internet devices, e.g., access points. Additionally, devices 120 are commonly included, e.g., an audio input device such as a microphone. System 100 often includes a touch screen 170 for data input and display/rendering. System 100 also typically includes various memory devices, for example flash memory 180 and SDRAM 190.

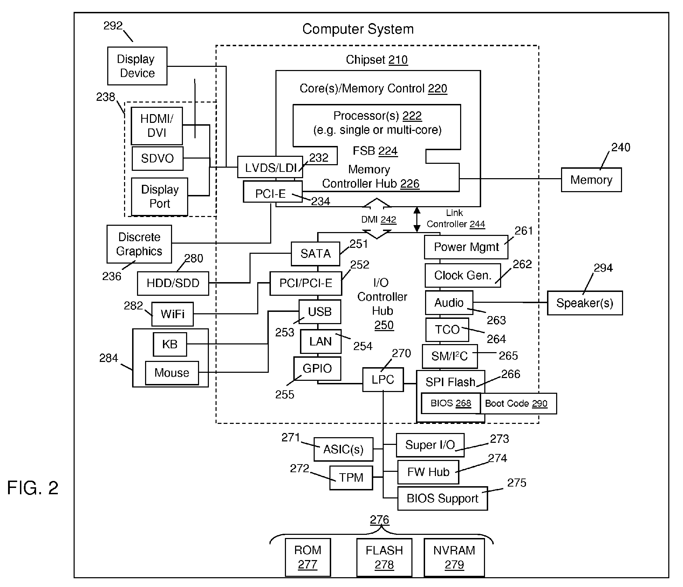

FIG. 2 depicts a block diagram of another example of information handling device circuits, circuitry or components. The example depicted in FIG. 2 may correspond to computing systems such as the THINKPAD series of personal computers sold by Lenovo (US) Inc. of Morrisville, NC, or other devices. As is apparent from the description herein, embodiments may include other features or only some of the features of the example illustrated in FIG. 2.

The example of FIG. 2 includes a so-called chipset 210 (a group of integrated circuits, or chips, that work together, chipsets) with an architecture that may vary depending on manufacturer (for example, INTEL, AMD, ARM, etc.). INTEL is a registered trademark of Intel Corporation in the United States and other countries. AMD is a registered trademark of Advanced Micro Devices, Inc. in the United States and other countries. ARM is an unregistered trademark of ARM Holdings plc in the United States and other countries. The architecture of the chipset 210 includes a core and memory control group 220 and an I/O controller hub 250 that exchanges information (for example, data, signals, commands, etc.) via a direct management interface (DMI) 242 or a link controller 244. In FIG. 2, the DMI 242 is a chip-to-chip interface (sometimes referred to as being a link between a "northbridge" and a "southbridge"). The core and memory control group 220 include one or more processors 222 (for example, single or multi-core) and a memory controller hub 226 that exchange information via a front side bus (FSB) 224; noting that components of the group 220 may be integrated in a chip that supplants the conventional "northbridge" style architecture. One or more processors 222 comprise internal arithmetic units, registers, cache memory, busses, I/O ports, etc., as is well known in the art.

In FIG. 2, the memory controller hub 226 interfaces with memory 240 (for example, to provide support for a type of RAM that may be referred to as "system memory" or "memory"). The memory controller hub 226 further includes a low voltage differential signaling (LVDS) interface 232 for a display device 292 (for example, a CRT, a flat panel, touch screen, etc.). A block 238 includes some technologies that may be supported via the LVDS interface 232 (for example, serial digital video, HDMI/DVI, display port). The memory controller hub 226 also includes a PCI-express interface (PCI-E) 234 that may support discrete graphics 236.

In FIG. 2, the I/O hub controller 250 includes a SATA interface 251 (for example, for HDDs, SDDs, etc., 280), a PCI-E interface 252 (for example, for wireless connections 282), a USB interface 253 (for example, for devices 284 such as a digitizer, keyboard, mice, cameras, phones, microphones, storage, other connected devices, etc.), a network interface 254 (for example, LAN), a GPIO interface 255, a LPC interface 270 (for ASICs 271, a TPM 272, a super I/O 273, a firmware hub 274, BIOS support 275 as well as various types of memory 276 such as ROM 277, Flash 278, and NVRAM 279), a power management interface 261, a clock generator interface 262, an audio interface 263 (for example, for speakers 294), a TCO interface 264, a system management bus interface 265, and SPI Flash 266, which can include BIOS 268 and boot code 290. The I/O hub controller 250 may include gigabit Ethernet support.

The system, upon power on, may be configured to execute boot code 290 for the BIOS 268, as stored within the SPI Flash 266, and thereafter processes data under the control of one or more operating systems and application software (for example, stored in system memory 240). An operating system may be stored in any of a variety of locations and accessed, for example, according to instructions of the BIOS 268. As described herein, a device may include fewer or more features than shown in the system of FIG. 2.

Information handling device circuitry, as for example outlined in FIG. 1 or FIG. 2, may be used in devices such as tablets, smart phones, personal computer devices generally, and/or electronic devices which users may use to store or find files or information. For example, the circuitry outlined in FIG. 1 may be implemented in a tablet or smart phone embodiment, whereas the circuitry outlined in FIG. 2 may be implemented in a personal computer embodiment. Additionally, the circuitry as outline in FIG. 1 and FIG. 2 may be used by a cloud service device or devices.

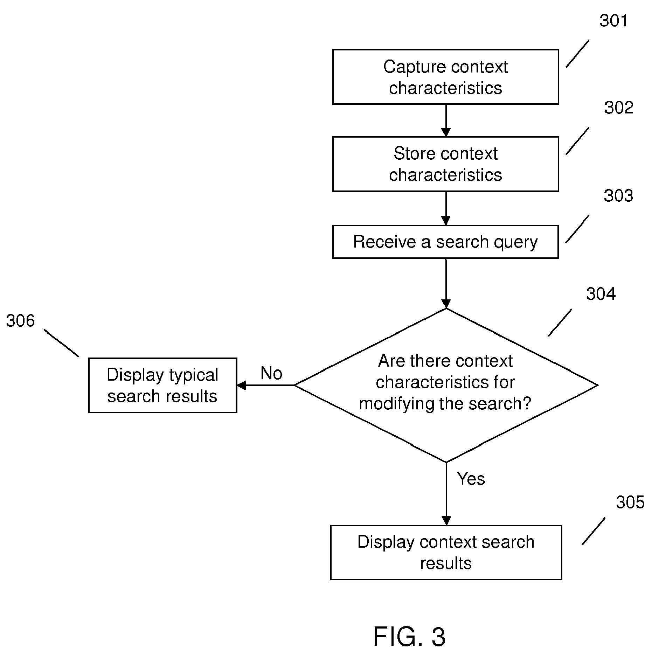

Referring now to FIG. 3, at 301, an embodiment may capture context characteristics relating to a user. At 302, an embodiment may store the context characteristics in a storage location, for example, a local, remote, cloud, removable, or other storage location. The context characteristics may be any information relating to a user or a user's actions. For example, the context characteristics may include information relating to an application, recent file activity, email activity, a user's location, a user's calendar information, historical information about the user or user's actions, and the like. The context characteristics may include machine learned traits about the user. For example, an embodiment may track and capture information regarding a user's actions and use this information to learn about the user and a user's preferences. In one embodiment, the learned context characteristics may be developed into a user profile. In other words, an embodiment may develop a database or profile with the user's preferences and traits.

Capturing may comprise capturing characteristics in real-time, for example, at the time of the search. For example, at the time that a user is attempting to perform a search, an embodiment may determine that the user has a particular application open. Alternatively or additionally, the context characteristics may be captured at an earlier time and stored in a data store. For example, as a user is performing actions on an information handling device, the device may be tracking the actions a user is taking and storing this information in a data store. An embodiment may then access the data store in order to retrieve the context characteristics. Alternatively, the data store may upload the context characteristics to an embodiment or a location accessible by an embodiment. The context characteristics may be a combination of previously obtained context characteristics and context characteristics received at a time close to the user requesting a search. Context characteristics may also be captured from a variety of sources rather than just a single data store.

At 303, an embodiment may receive a search query. The search query may be provided by a user through different input methods, for example, voice, text, selection, and the like using a user input device (e.g., keyboard, touch screen, microphone, etc.). The search query may be a typical search query that a user may perform, for example, "baseball World Series winners". Alternatively, the search query may include ambiguous terms, for example, "emails sent by Bob". In this case, "Bob" may be an ambiguous term because the system may include multiple people named "Bob". Alternatively, "Bob" may be a nickname. Ambiguous terms may include exophoric, endophoric, and anaphoric terms, for example, "this", "that", "these", and "those".

Based upon the search query received at 303, an embodiment may determine if there are any context characteristics that can be used to modify the search at 304. For example, an embodiment may determine whether any context characteristics are relevant to the search query. These context characteristics may be independent characteristics of a user or may include the user profile as developed above. An embodiment may also determine if any context characteristics are accessible by an embodiment. For example, if the context characteristics are stored in a cloud storage device but an embodiment does not have access to the cloud storage device, an embodiment may determine that there are no context characteristics to use in modifying the search.

If no context characteristics can be used for modifying the search, an embodiment may perform a typical search and display those results at 306. If, however, context characteristics can be used to modify the search an embodiment may perform a search and display the contextual search results at 305. In performing this search, an embodiment may use separate data blocks in performing the search, rather than just appending or jumbling the data obtained from the context characteristics onto the search query. The separate data blocks may include the search query, the context characteristic relevant to the search query, metadata for the document, ephemeral data (e.g., what was open at the time the search query was received, when something was opened, etc.), and the like. This method helps to narrow the search rather than ballooning the search results as may occur if the search query and context characteristics are appending or jumbled together.

In one embodiment, the performing of the search may comprise receiving search results based upon the search query and then narrowing the search results based upon the at least one context characteristic. In other words, the search results based upon the search query may first be returned to an embodiment. Then an embodiment may determine narrow the search results based upon the at least one context characteristic. In other words, an embodiment may perform a multi-pass search. For example, an embodiment may perform a search based upon the search query. After receiving the results of the search query, an embodiment may narrow the search results using the context characteristics obtained at 301. Narrowing the search results may include determining a probability or confidence that the search result is what the user desires. This probability or confidence determination may be accomplished through weighting the context characteristics. For example, based upon the search query, an embodiment may determine what context characteristics may be most relevant to the search query. These context characteristics may be then given a greater weight in determining which search results are more pertinent to the search query that the user has performed.

Alternatively, an embodiment may use the context characteristics to modify the search query and return results more narrowly tailored to what the user may be looking for. For example, rather than returning the results based upon the search query and then narrowing the results, an embodiment may narrow the search query based upon the context characteristics and return search results based upon the narrowed search query. Alternatively, an embodiment may receive a search query and perform the search and, while performing the search, narrow the results based on the context characteristics. For example, as an embodiment is performing the search, search results may be removed from the results based on the context characteristics. As an example, if a user is working with a file system explorer and a user performs a search, the search results may favor local files and the user's cloud storage instead of web pages and email. In modifying the search query, an embodiment does not merely append search strings onto the search query. Rather, an embodiment uses separate data blocks as discussed above. In other words, if a person is located in "Funville" and searches for "restaurants", an embodiment does not just search "Funville restaurants".

Additionally or alternatively, the context characteristics may be used by an embodiment to resolve an ambiguous or multiple ambiguous term(s) in the search query. For example, if the search query includes an exophoric term, an embodiment may use context characteristics to define the exophoric term. As an example, if a user states "find the file for the meeting", the term "the meeting" is ambiguous. Using context characteristics, an embodiment may determine that the user's calendar indicates an upcoming meeting and that the user's location indicates the user is in a particular room associated with the meeting. The search may then be modified to look for files relating to the upcoming meeting, the meeting participants, and other such information.

The context characteristics which may be used to modify the search results may include all the context characteristics obtained at 301, or may include just a sub-set of the context characteristics. For example, an embodiment may have access to the user's history for the last 30 days, however, the search query relates to just the past seven days, so an embodiment may ignore any of the context characteristics before seven days ago. The context characteristics which are chosen by an embodiment to modify the search may be relevant to the search query. For example, if the search query is "find the file for the weekend", an embodiment may choose context characteristics relating to the user's calendar to modify the search, rather than context characteristics relating to historical data.

One embodiment may weight the context characteristics to determine which context characteristics may be used to modify the search. The weighting may be based upon a predetermined factor. This predetermined factor may include a predefined weighting, for example, application data will always be weighted higher than historical data. Alternatively, the predetermined factors may change based upon machine learning. In other words, as the machine learns more about the user, searches a user performs, and other information, the weightings of particular context characteristics may change. In other words, different searches may weight different context characteristics higher. For example, if a search query is performed within an application, the search results may be modified to only include files relating to the application. As an example, if a user opens a picture application and then performs a search containing the term "baseball", the search may only produce results that include pictures of baseballs, rather than any articles or files containing only text relating to baseball.

Once the context characteristics are weighted, an embodiment may modify the search using the weighting of the context characteristics. For example, as an embodiment is performing a search, the search results relating to lower weighted context characteristics may be removed from the search results. As an example, if a user is currently looking a web page related to football and performs a file search, the search results may return results only relating to football. Additionally or alternatively, an embodiment may use the weighting of the context characteristics to determine the most likely search that the user is attempting to perform. For example, if the user is performing a search with ambiguous terms, an embodiment may use context characteristics to determine what the user is most likely searching for.

If the search cannot be modified using the context characteristics, an embodiment may perform a typical search and display those search results at 306. If, however, the search can be modified using context characteristics, an embodiment may display on a display device, search results returned from the modified search at 305. In one embodiment, these results may be displayed in an order of relevance. This order of relevance may be based upon the search query and the at least one context characteristic used to perform the modified search. For example, an embodiment may determine that particular search results are more relevant to the search query based on the context characteristics that are used and may display those search results in a more prominent location on the display device.

The various embodiments described herein thus represent a technical improvement to current search interfaces. Using the techniques described herein, a search interface can use context characteristics relating to a user to modify a search. In one embodiment, the context characteristics may assist in resolving ambiguous terms contained within the search query provided by the user. Thus, using the methods and systems described herein, a user can obtain search results that are relevant to what the user is actually searching for, even if the user does not provide or articulate a clearly defined unambiguous search query.

As will be appreciated by one skilled in the art, various aspects may be embodied as a system, method or device program product. Accordingly, aspects may take the form of an entirely hardware embodiment or an embodiment including software that may all generally be referred to herein as a "circuit," "module" or "system." Furthermore, aspects may take the form of a device program product embodied in one or more device readable medium(s) having device readable program code embodied therewith.

It should be noted that the various functions described herein may be implemented using instructions stored on a device readable storage medium such as a non-signal storage device that are executed by a processor. A storage device may be, for example, an electronic, magnetic, optical, electromagnetic, infrared, or semiconductor system, apparatus, or device, or any suitable combination of the foregoing. More specific examples of a storage medium would include the following: a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a storage device is not a signal and "non-transitory" includes all media except signal media.

Program code embodied on a storage medium may be transmitted using any appropriate medium, including but not limited to wireless, wireline, optical fiber cable, RF, et cetera, or any suitable combination of the foregoing.

Program code for carrying out operations may be written in any combination of one or more programming languages. The program code may execute entirely on a single device, partly on a single device, as a stand-alone software package, partly on single device and partly on another device, or entirely on the other device. In some cases, the devices may be connected through any type of connection or network, including a local area network (LAN) or a wide area network (WAN), or the connection may be made through other devices (for example, through the Internet using an Internet Service Provider), through wireless connections, e.g., near-field communication, or through a hard wire connection, such as over a USB connection.

Example embodiments are described herein with reference to the figures, which illustrate example methods, devices and program products according to various example embodiments. It will be understood that the actions and functionality may be implemented at least in part by program instructions. These program instructions may be provided to a processor of a device, a special purpose information handling device, or other programmable data processing device to produce a machine, such that the instructions, which execute via a processor of the device implement the functions/acts specified.

It is worth noting that while specific blocks are used in the figures, and a particular ordering of blocks has been illustrated, these are non-limiting examples. In certain contexts, two or more blocks may be combined, a block may be split into two or more blocks, or certain blocks may be re-ordered or re-organized as appropriate, as the explicit illustrated examples are used only for descriptive purposes and are not to be construed as limiting.

As used herein, the singular "a" and "an" may be construed as including the plural "one or more" unless clearly indicated otherwise.

This disclosure has been presented for purposes of illustration and description but is not intended to be exhaustive or limiting. Many modifications and variations will be apparent to those of ordinary skill in the art. The example embodiments were chosen and described in order to explain principles and practical application, and to enable others of ordinary skill in the art to understand the disclosure for various embodiments with various modifications as are suited to the particular use contemplated.

Thus, although illustrative example embodiments have been described herein with reference to the accompanying figures, it is to be understood that this description is not limiting and that various other changes and modifications may be affected therein by one skilled in the art without departing from the scope or spirit of the disclosure.

## Claims

1. A method, comprising:
capturing, using a processor, context characteristics relating to a user;
storing, using a processor, the context characteristics relating to a user;
receiving, at a device, a search query;
performing a search based on the search query, wherein the search is modified based on at least one context characteristic relevant to the search query; and
displaying, on a display device, search results returned from the search.

2. The method of claim 1, wherein the performing comprises receiving search results from the search based on the search query, and wherein the search is modified by narrowing the search results based upon the at least one context characteristic.

3. The method of claim 1, wherein the search is modified by modifying the search query based upon the at least one context characteristic.

4. The method of claim 1, further comprising developing a user profile based upon the context characteristics and wherein the at least one context characteristic comprises the user profile.

5. The method of claim 1, wherein the search query contains an ambiguous term and wherein the at least one context characteristic is used to resolve the ambiguous term.

6. The method of claim 1, wherein the context characteristics are weighted based upon a predetermined factor.

7. The method of claim 1, wherein the search is modified based upon a weighting of the context characteristics.

8. The method of claim 1, wherein the displaying comprises displaying the search results in order of relevance based on the search query and the at least one context characteristic.

9. The method of claim 1, wherein the at least one context characteristic comprises data indicating that the search query is received within an application.

10. The method of claim 1, wherein the at least one context characteristic is selected from the group of data consisting of: location data, application data, historical data, calendar data, and email data.

11. An information handling device, comprising:
a display device;
a processor operatively coupled to the display device;
a memory device that stores instructions executable by the processor to:
capture context characteristics relating to a user;
store the context characteristics relating to a user;
receive a search query;
perform a search based on the search query, wherein the search is modified based on at least one context characteristic relevant to the search query; and
display, on the display device, search results returned from the search.

12. The information handling device of claim 11, wherein to perform comprises receiving search results from the search based on the search query, and wherein the search is modified by narrowing the search results based upon the at least one context characteristic.

13. The information handling device of claim 11, wherein the search is modified by modifying the search query based upon the at least one context characteristic.

14. The information handling device of claim 11, wherein the instructions are further executable by the processor to develop a user profile based upon the context characteristics and wherein the at least one context characteristic comprises the user profile.

15. The information handling device of claim 11, wherein the search query contains an ambiguous term and wherein the at least one context characteristic is used to resolve the ambiguous term.

16. The information handling device of claim 11, wherein the context characteristics are weighted based upon a predetermined factor.

17. The information handling device of claim 11, wherein the search is modified based upon a weighting of the context characteristics.

18. The information handling device of claim 11, wherein to display comprises displaying the search results in order of relevance based on the search query and the at least one context characteristic.

19. The information handling device of claim 11, wherein the at least one context characteristic comprises data indicating that the search query is received within an application.

20. A product, comprising:
a storage device that stores code executable by a processor, the code comprising:
code that captures context characteristics relating to a user;
code that stores the context characteristics relating to a user;
code that receives a search query;
code that performs a search based on the search query, wherein the search is modified based on at least one context characteristic relevant to the search query; and
code that displays, to a display device, search results returned from the search.
